# EUROPEAN PATENT SPECIFICATION

(11) **EP 3 363 334 B1**
(45) Date of publication and mention of the grant of the patent: **21.08.2019**
(21) Application number: 17460005.6
(22) Date of filing: 20.02.2017
(51) Int. Cl.: A47G 1/04, A47B 67/00, B32B 17/06, F21V 33/00

(54) **MIRROR FURNITURE DOOR AND A METHOD OF MANUFACTURING THE SAME**
SPIEGELMÖBELTÜR UND VERFAHREN ZUR HERSTELLUNG DAVON
PORTE DE MEUBLE À MIROIR ET SON PROCÉDÉ DE FABRICATION

(43) Date of publication of application: 22.08.2018
(73) Proprietor: PRESTIGE GLASS Adam Stobba, 83-200 Starogard Gdanski (PL)
(72) Inventor: Stobba, Adam, 83-207 Kokoszkowy (PL)
(74) Representative: Czabajski, Jacek

(56) References cited:
- EP-A1- 1 734 092
- JP-A- H 078 342
- JP-A- 2006 149 555
- JP-U- H0 638 682

## Description

The invention relates to a mirror furniture door, especially used in bathroom furniture, and a method of manufacturing the same. The use of this type of single or multi-leaf furniture doors makes that furniture, in particular cabinets provided with such doors, gain new functions. Apart from a storage function inside the furnishings, this type of furniture triggers the effect of the optical enlargement of usually small rooms, and, in addition, can also be practically used as mirrors.

The term mirror furniture door is understood in this patent specification as front, visible parts of openable furniture components in the form of doors. The solution, according to the invention, relates to furniture doors, but it can also be used for the manufacture of other furniture fronts, especially for bathroom furniture. The term mirror doors should be understood in this patent specification as furniture doors or fronts made of mirrors which are bonded together with varnished surfaces. A layer of silver or other metal on the back side of a mirror is covered with a layer of protective varnish.

There are a number of known solutions of mirror furniture doors, in most cases intended for equipping bathroom furniture. According to the solution known from the patent specification of international application No. WO 2016/199434, a piece of bathroom furniture comprises an upper body and a bottom body. The upper body comprises doors in the form of mirrors and is provided with illuminating devices for illuminating a user in front of the mirror. The upper body is also provided with a camera for capturing an image of the user's face. The illuminating devices comprise two vertical lighting strips, dividing the front wall of the upper body into three parts. The three parts of the front wall are mirror doors, with one door being provided with a camera. The piece of bathroom furniture, according to this know solution, is further provided with a unit processing the expression on the user's face captured by the camera which can also work as a video camera. The piece of furniture is also provided with a unit for changing the illumination colour of the illuminating devices.

Another known solution is disclosed in American patent specification No. US 5255971. This document provides a solution of a medicine cabinet. This solution of the medicine cabinet is constructed predominantly from plastic material in the form of components adapted for rapid assembly. The medicine cabinet includes a forwardly open main housing provided on inner wall surfaces with preformed grooves which cooperate with one or more upright central shelf support brackets. The shelves can support an array of different shelf widths, according to the interior configuration required at a given time by the user. The medicine cabinet main housing further includes improved self-closing hinges on which mirror door leaves are rotatably fixed for swingably supporting a mirror door on the cabinet housing in a desired opening position. The hinge assemblies are made of plastic and do not require metal parts which corrode in a wet environment, such as a bathroom. The mirror door includes a recess. The door includes a recessed baseplate for a mirror limited by protruding edges. In combination with an improved mirror frame, the whole medicine cabinet is adapted for simple snap fit mounting the medicine cabinet components.

Next solution is known from JPH078342. To reduce the number of part items of a mirror cabinet with two or three mirrors which is used above a washing stand by using a center mirror or a side mirror as a cover of a lighting to obviate the part items to be used to mount the cover. A mirror cabinet in which a translucent portion is provided at either of a side mirror or a center mirror at least, and a lighting is placed at the back of the translucent portion, additionally, a mirror cabinet in which a side mirror is installed at a lighting storage space. The side mirror can be opened and closed freely, and a translucent portion is provided at the side mirror. Other solutions of this kind are disclosed in JPH0638682, JP 2006149555, EP 1734092 and in US 4396249.

Mirror elements used in the manufacturing processes of mirror doors usually comprise laminated elements. Bonded layers comprising a mirror door may include or not some graphic images applied during the manufacturing process of the door. This type of a known solution is disclosed in Polish patent specification No. P.408398. It provides a method of manufacturing laminated mirrors with graphic images, used for the manufacture of bathroom mirrors and for other living spaces where high aesthetic properties of mirrors are required. The method is characterised in that a mirror layer and a protective layer are removed from a glass pane in the area where graphic images are to be applied. Then, graphic images are applied on primer and permanently laminated with the inner surface of the glass pane using EVA film. A laminated mirror panel is obtained where an upper layer is the glass pane comprising the mirror layer and further the protective layer containing EVA film thereon. A layer of graphic images can be applied on a layer of connecting EVA film on the primer which is the last layer of the laminated mirror.

Another known solution of a method of manufacturing a mirror door, especially for bathroom furniture is disclosed in patent application specification No. P.408409. According to this known solution, a method of manufacturing a bathroom mirror door involves cutting mirror panes to a required dimension, and then cleaning the panels and checking them in terms of quality. Then, the edges of the panels are chamfered and parts of the panels are sandblasted using fused alumina with a grain size of 80-120 µm. Then, on the back coated surfaces of the panels a double-sided tape with a thickness of 0.18mm-0.23mm is applied to bond the two panels together. Then, when the two panels are bonded together, holes for door handles are drilled. Afterwards the edges are subjected to straight line or irregular grinding and the bonded door is cleaned. Cleaning is performed in a solution of osmotic water at a temperature of 30°C, and at the same time hinge mounting plates to be connected with the prepared mirror panels are prepared. The preparation of the hinges involves roughing adhering surfaces to obtain roughness, and then pressing the hinges against the front surface of the mirror. Then, the arranged door units are heated at a temperature of up to 50°C, and then the door units are annealed at a temperature of 50°C and afterwards annealed at a temperature of 90°C, and then the annealing temperature is increased to 180°C. Afterwards the annealing process is stopped and the annealed units are gradually cooled to the ambient temperature, and then the door units are packed into bulk packs. According to this known solution, a three-layer mirror door is obtained, where between two mirror panels a layer of an adhesive film is arranged.

In a number of cases lighting accents complement bathroom furniture. They are provided using light sources dedicated to furniture fronts or through the use of lighting installed inside cabinets by using doors with windows. In this type of solutions, mirror doors are not translucent, so it is impossible to use the light from the inside of a cabinet to provide outside lighting with mirror doors closed, which has functional and decorative values. When using such a furniture door as a mirror, a light source is a desired adjunct. The purpose of the invention is to design the manufacturing and construction technology of a mirror furniture door comprising opaque or transparent zones through which light passes from the inside of a cabinet, useful when the door is used by a user as a mirror. This type of zones, depending on their shape, can also perform a decorative function.

In this type of solutions the problem is to seal the edge of an opaque or transparent zone, if it is on the edge of a door. Such a zone can be made by sandblasting a particular portion of the back side of a mirror until protective varnish and a layer of dusted metal are removed resulting in an opaque portion of the surface. When two such mirrors are bonded together with their enamelled back sides, it turns out, however, that the edge of contact of said two opaque or transparent zones of both mirrors, at the edge of the mirrors, allows dust, dirt, water and steam to pass through which usually penetrate the interior of said opaque and transparent zones, starting from the edge of mirrors. The object of the invention is to provide such a structure and manufacturing technology of mirror furniture doors comprising the described opaque or transparent zones to seal said edges, and thus to eliminate this unfavourable phenomenon.

This object has been achieved, according to claim 1 and the other claims.

According to the invention, a mirror furniture door leaf comprises two mirrors connected by bonding the back surfaces of both mirrors dusted with a layer of metal and covered by protective varnish. The thickness of the metal and protective varnish layer on the back surface of the mirror is usually from 0.1mm to 0.2mm. The back surfaces of both mirrors are bonded together with a layer of an EVA (ethylene- vinyl acetate) film. The term EVA film, used further in the specification, means ethylene-vinyl acetate film. The door on both sides comprises the mirrors, wherein both mirrors are bonded together by means of said EVA film layer separating them from each other. Each of the mirrors comprises opaque or transparent zones, without the protective varnish and dusted metal layer. The opaque or transparent zones in both mirrors overlap one another so that in the mirrors bonded together light can pass through these zones from the inside of cabinets to the outside.

According to the invention, the mirror furniture door is characterised in that at least one opaque or transparent zone of at least one of the two bonded mirrors comprises an additional EVA film layer.

An initial thickness of an EVA film in a zone without the protective varnish and dusted metal layer may range from 0.2mm to 0.76mm. The term initial thickness is understood as the thickness of the EVA film used.

In a preferred embodiment of the invention, said EVA film may be an opaque film. In another embodiment of the invention, an EVA film may be a transparent film.

In a preferred embodiment an EVA film separating the two mirrors may comprise on at least one surface a ferromagnetic film layer.

According to the invention, the method of manufacturing the mirror furniture door involves cutting two mirrors to size, and then removing the protective varnish and dusted metal layers from the zones of the mirrors to be illuminated. Then, between the back surfaces of the two mirrors the EVA film layer is arranged and the furniture door leaf arranged in this manner is subjected to a lamination process to bond the two panels together. The term lamination is understood in this patent specification as an annealing process under vacuum of said layers arranged in one set. Lamination is aimed at bonding both mirrors with a hot liquefied EVA film.

The method according to the invention is characterised in that when the protective varnish and dusted metal layer is removed in said zones, the EVA film layer is arranged in at least one opaque or transparent zone of at least one mirror. Then, the two mirrors are arranged with their back surfaces together with the EVA film layers separating them and a door leaf arranged in this manner is laminated to liquefy the EVA film and thus bond the two mirrors with their back surfaces together. Before the start of lamination of a door leaf arranged in one assembly, this door leaf assembly is placed under vacuum to vent the space between the two mirrors arranged in one assembly and the pressure in the annealing zone is reduced to the value from -0.5 to -1.0 bar.

In the solution according to the invention, prior to pressure reduction in the lamination zone, the arranged door assembly is sealed at the edges, preferably by covering the edges with a sealing foil.

According to the invention, when the pressure is reduced in the lamination zone, in the first stage the temperature is increased to 60°C-80°C and this temperature is maintained for about 20-40 minutes, and then in the second lamination stage the temperature in this annealing zone is increased to 110°C-135°C and this temperature is maintained for 20-40 minutes, and then the temperature in the lamination zone is decreased.

Before the two mirrors are bonded together, in another preferred embodiment of the invention, on the EVA film layer separating the mirrors the ferromagnetic film layer is applied from at least one side.

According to the invention, a new solution of a double-sided mirror door comprising zones permeable to light from the inside of a cabinet to the outside has been proposed. Before both mirror panels were bonded together with their back surfaces using the EVA film layer, in both mirrors the previously designed light permeable zones had been cleaned by the removal of the protective varnish and dusted metal layer, for example by sandblasting. Then, the two mirrors were put together with the film separating them, having previously filled the opaque or transparent zone in one of the panels with the EVA film layer with a thickness greater than the total depth of the light permeable zones in both mirrors. With a total exemplary depth of each of the opaque or light permeable zones in the protective varnish and dusted metal layer of 0.15mm, an EVA film with a thickness of 0.38mm is used for example. This makes the door assembly significantly easier, and the subsequent lamination of the whole leads to the melting of the filling EVA film and the EVA film with an excess thickness, separating both mirrors, resulting in both opaque or transparent zones in both mirrors being filled and the excess EVA film material being pressed out on the edges of the opaque or transparent zones. Therefore, the door installation process before lamination has been simplified by using one thicker film on one side of the light permeable zone, and at the same time the edges of the transparent zones have been sealed, which was the objective of the invention.

At the same time, carrying out the lamination process under vacuum has been proposed. This has made it possible to suck air bubbles formed at the contact of the mirrors and the film separating the mirrors and the film filling the opaque or transparent zones. The whole lamination process is carried out under vacuum.

By dividing this process into particular stages, with constant negative pressure, the air bubbles formed during lamination are removed both from the EVA film layer separating the two mirrors and the film filling said opaque or transparent zones. Due to the density of the film, also under lamination, the division of the lamination process of doors into stages has also been proposed, which facilitates the removal of air bubbles in longer periods of time.

The object of the invention is shown in the examples of realization in the accompanying drawings in which the individual figures show:
- Fig. 1: - an exploded view of the mirror door in the first embodiment.
- Fig. 2: - detail A from Fig. 1.
- Fig. 3: - a front view of the complete door, according to Fig. 1.
- Fig. 4: - a section of the door, according to Fig. 3.
- Fig. 5: - a section of a portion of the door, detail B, according to Fig. 4.
- Fig. 6: - an exploded view of the mirror door in the second embodiment.
- Fig. 7: - detail C from Fig. 6.

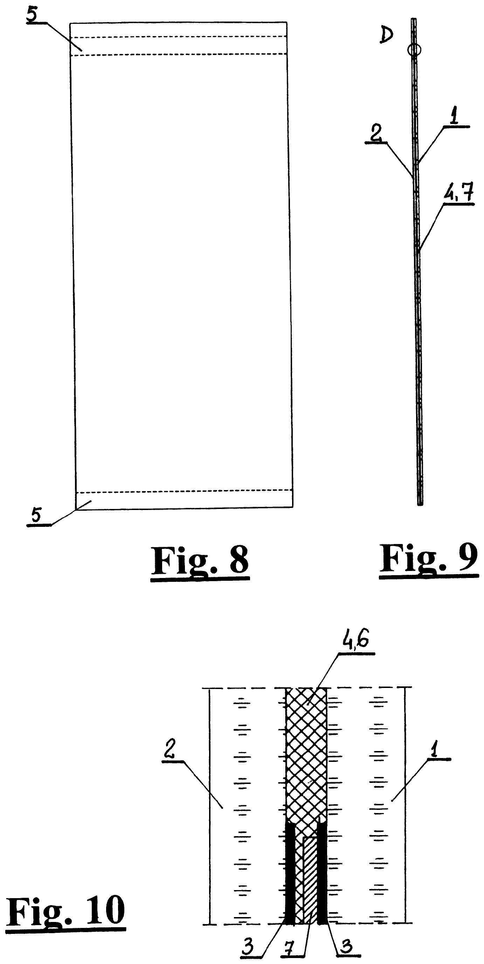

- Fig. 8: - a front view of the complete door, according to Fig. 6.
- Fig. 9: - a section of the door, according to Fig. 8.
- Fig. 10: - a section of a portion of the door, detail D, according to Fig. 4.

### Example I

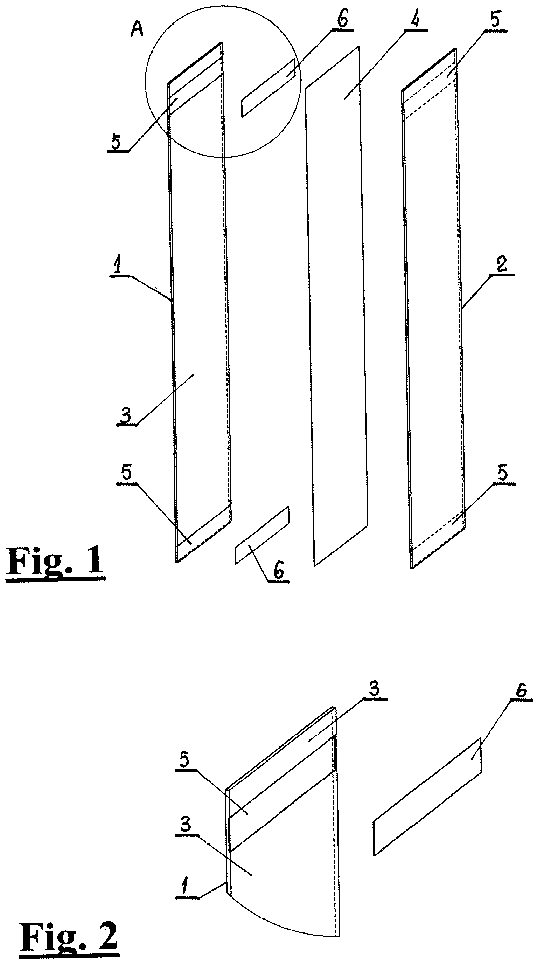

The furniture door, according to the invention, have a layered structure. As shown in the first embodiment in an exploded view in Fig. 1, the mirror furniture door leaf comprises two mirrors 1,2 connected by bonding the back surfaces of both mirrors 1,2 dusted with a known layer of metal, such as silver, not shown in the accompanying drawings, and covered by a protective varnish 3 layer. In this embodiment the thickness of the metal and protective varnish 3 layer on the back surface of the mirrors 1,2 is 0.15mm. The back surfaces of both mirrors are bonded together with a connecting EVA film layer 4, which is ethylene- vinyl acetate. In this example the thickness of the film is 0.38mm.

Therefore, in this example, the furniture door leaf on both sides comprises the mirrors 1,2, wherein both mirrors are bonded together with their back surfaces by means of said EVA film layer 4 separating them. Each of the mirrors 1,2 comprises light permeable, opaque or transparent zones 5, without the protective varnish 3 and dusted metal layer. The zones 5 without the protective varnish 3 and dusted metal in both mirrors 1,2 overlap one another, so that in the mirrors 1,2 bonded together light can pass through these zones 5 from the inside of cabinets to the outside. The inside of known cabinets closed by means of the doors according to the invention is not shown in the accompanying drawing for its clarity.

Fig. 1 in an exploded view shows that the mirror 1 in the zone 5 without the protective varnish 3 and the metal layer, comprises an additional EVA film 6. In this embodiment, the mirror 1 comprises two zones 5, upper and lower. The second mirror 2 comprises the same opaque or transparent zones 5. The zones 5, when both mirrors 1,2 are put with their back surfaces together, overlap in both mirrors. When both mirrors 1,2 are put together, between the surfaces of their point contact there is the EVA film layer 4. However, in this embodiment, both zones 5 of the mirror 1 contain the additional EVA film 6 sheets. This is more precisely shown in Fig. 2, where detail A from Fig. 1 is shown. The figure shows the upper light permeable zone 5 in the form of a strip, sandblasted in the protective varnish 3 layer. During the installation of the door leaf, before lamination, in both zones 5 of the mirror 1 the additional EVA film 6 in the form of a strip is arranged. In other embodiments, the shapes of the zones 5 can be different and then the shape of the additional film 6 will be different. Fig. 1 shows that the additional film 6 sheets are arranged only in the zones 5 of one mirror 1. The same EVA film 6 sheets in the corresponding light permeable zones 5 of the second mirror 2 are not arranged. In this embodiment, the thickness of the additional EVA film 6 sheet arranged in the opaque or transparent zone of the mirror 1 before the lamination of the whole pre-assembled door is 0.38mm. The term initial thickness should be understood as the thickness of the EVA film used.

In this example, the additional EVA film 6 is an opaque film which advantageously affects the diffusion of the light passing through the zones 5 from the inside of a cabinet to the outside. In other examples, the additional EVA film 6 can be transparent or coloured.

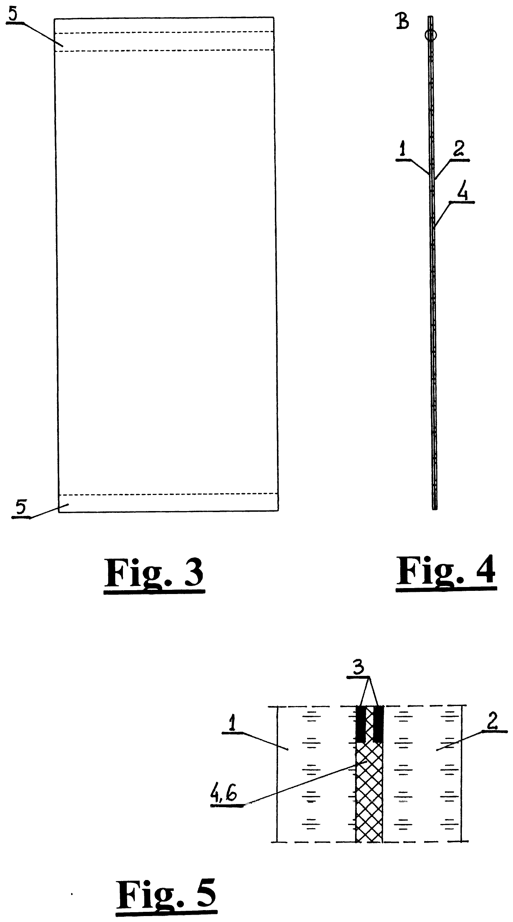

Fig. 3 shows a view from the outside of the front surface of the door leaf described above. As shown in the figure, in the mirror surface of the completely assembled door, according to Fig. 1 and Fig. 2, two zones 5 are formed. In this embodiment, the zones 5 have the form of horizontal stripes, located near the upper and lower horizontal edge of the door. In other embodiments, the zones 5 and the additional film 6 sheets may be of a different shape. The same door is shown in a side view in Fig. 4. In this figure detail B is shown whose section is shown in Fig. 5.

Fig. 5 shows a cross-section in the area of the edge of the zone 5 of the finished door, after the lamination process. This opaque or transparent zone is limited from both sides by the edges of the protective varnish 3. This figure only shows the upper boundary of the zone 5 limited by the protective varnish 3 stripe left at the upper edges of the mirrors 1,2. According to this specification, in this embodiment, under the protective varnish layer there is a known layer of dusted silver, not shown in the drawings. In this figure, between the mirrors 1,2, there is the EVA film layer 4 and the additional EVA film 6 layer which in the finished furniture door, after lamination, melted and formed a uniform layer 4,6 shown in this figure.

### Example II

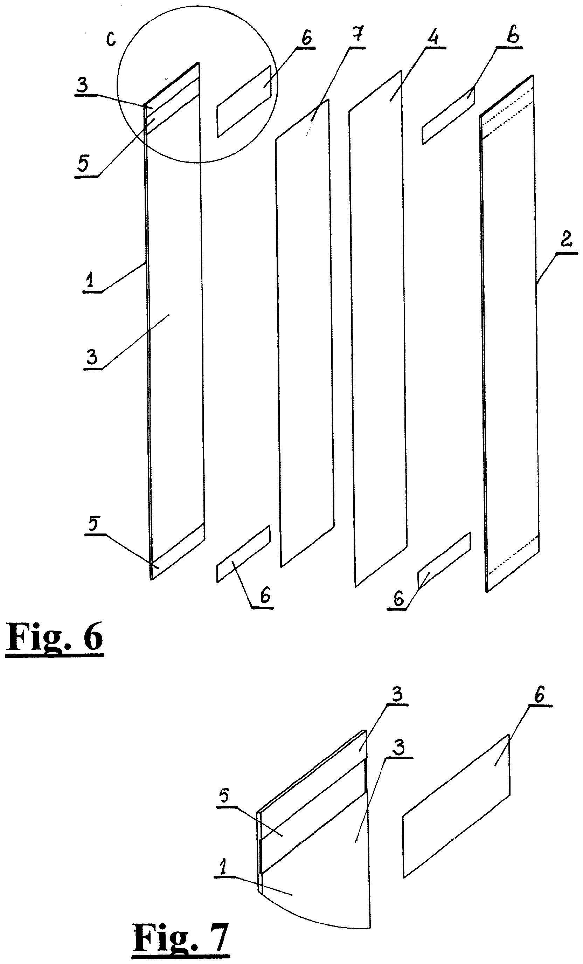

Figures from 6 to 10 show the second example of the door according to the invention. The structure of the door is the same as in the first embodiment. However, the door, according to this example, is provided with an additional ferromagnetic film 7 layer with adhesive on one side, shown in an exploded view in Fig. 6. The ferromagnetic film 7 layer is provided between the EVA film layer 4 and the back surface of the mirror 1. In this example, the ferromagnetic film 7 layer extends over the entire surface of the protective varnish 3 of the mirror 1, between the light permeable zones 5. Thus, the back surface of the mirror 1 comprises the protective varnish layer 3, the dusted silver layer comprises the lower and bottom zone 5, and the zones 5 comprise the additional EVA film 6 sheets and between the additional EVA film 6 sheets there is the ferromagnetic film 7 layer. The whole is covered with the EVA film layer 4 on which the second mirror 2 is arranged with the zones 5 comprising further additional EVA film 6 sheets. In this example, the light permeable zones 5 of the second mirror 2 had also been provided with the additional EVA film 6 sheets before the complete furniture door assembled was subjected to the annealing process.

### Example III

The method of manufacturing the mirror furniture door involves cutting two identical mirrors 1,2 to size, and then removing the protective varnish 3 layer and the dusted metal layer from the areas of the mirrors 1,2 to be illuminated. In this example, these areas are sandblasted in a sandblasting chamber to obtain the light permeable zones 5 in this areas. When the protective varnish and dusted metal layers are removed in the zones 5, in said zones 5 of one of the mirrors 1 EVA film sheets having the size of the zones 5 are arranged. In the embodiment according to Fig. 1, the mirror 1 comprises two sandblasted zones 5, and two additional EVA film sheets in the form of strips corresponding to the size of the zones 5 are shown in an exploded view. In other examples, the opaque zones 5 may have a different form, therefore, also the additional EVA film 6 sheets will have a different shape. Then, between the back surfaces of both mirrors 1,2 the EVA film layer 4 is arranged and the furniture door leaf arranged in this manner is subjected to lamination to bond the two mirrors 1,2 together by liquefying at a high temperature the EVA film layer 4 separating the back surfaces of both mirrors 1,2. By liquefying the EVA film layer 4, both mirrors 1,2 are bonded with their back surfaces. Before the start of lamination of a door leaf arranged in one assembly, the door assembly is placed under vacuum to vent the space between the two mirrors arranged in one assembly and the pressure is reduced to the value from -0.5 to -1.0 bar. Prior to pressure reduction, the arranged door leaf assembly is sealed at the edges, preferably by covering the edges with a known sealing foil in a known manner. The door assembly, according to this example, prepared in this manner is put into a known, tight, temperature resistant plastic bag, the bag is sealed and the air is sucked off it. When the pressure is reduced to -0.75 bar, the lamination procedure of the door sealed in the bag starts. In the first stage the temperature of the bag with the door is increased to the value ranging from 70°C and this temperature is maintained for a period from about 30 minutes. Then, in the second annealing stage, the temperature in this annealing zone is increased to the value ranging from 127°C and this temperature is maintained for a period from 30 minutes. After this period, the bag with the door is removed from the furnace for slow cooling and at the same time the temperature is reduced in the lamination zone.

### Example IV

Before the two mirrors 1,2 are bonded together with the EVA film layer 4 separating them, in another example of the invention, on the EVA film layer separating the mirrors the ferromagnetic film 7 layer is applied from one side. Such a film has a self-adhesive layer on one side. The door assembly arranged in this manner is subjected to technological processes as described in example III.

Example II and example III provide a description of the structure and method of manufacturing the door from the mirrors 1,2 connected together with their back surfaces, where between the mirrors, in examples II and IV, the ferromagnetic film 7 layer is additionally arranged. This structure of the furniture door makes it possible to provide the door with a known additional magnifying mirror fixed on a magnetic base. The cooperation of the magnetic base and the aforementioned ferromagnetic film enables the magnifying mirror to be slidably fixed to the door, according to the invention, allowing a user to firmly fix the magnifying mirror to the mirror door, according to the invention, in a chosen place.

### List of designations in the figures

1.Mirror.
2.Mirror.
3.Protective varnish.
4.EVA film layer.
5.Opaque or transparent zone.
6.Additional EVA film.
7.Ferromagnetic film.

## Claims

1. A mirror furniture door comprising two mirrors (1,2) connected by bonding the back surfaces of both mirrors (1,2) dusted with a layer of metal and covered by protective varnish (3), by means of a connecting EVA (ethylene-vinyl acetate) film layer (4), so that the door leaf on both sides comprises the mirrors (1,2), wherein both said mirrors are bonded together by means of said EVA film layer (4) separating them, wherein each of the mirrors (1,2) comprises light permeable zones (5), without the protective varnish (3) and dusted metal, where the light permeable zones (5) in both mirrors (1,2) put together overlap one another, so that in the mirrors (1,2) bonded together light can pass through the light permeable zones (5), **characterised in that,** at least one light permeable zone (5), without the protective varnish (3) and the metal layer of at least one mirror (1,2), comprises an additional EVA film (6) sheet.

2. The door, according to claim 1, **characterised in that,** the initial thickness of the additional EVA film (6) sheet in the light permeable zone (5), without the protective varnish (3) and dusted metal layer ranges from 0.2mm to 0.76mm.

3. The door, according to claim 1 or 2, **characterised in that,** the EVA film (4,6) is an opaque film.

4. The door, according to claim 1 or 2, **characterised in that,** the EVA film (4,6) is a transparent film.

5. The door, according to one of the claims from 1 to 4, **characterised in that,** the EVA film layer (4) separating both mirrors comprises on its surface a ferromagnetic film (7) layer.

6. A method of manufacturing of the mirror furniture door according to any preceding claims, involving cutting the two mirrors (1,2) to size, and then removing the protective varnish (3) and dusted material layers from the zones of the mirrors (1,2) to be opaque or transparent, and then arranging the EVA (ethylene-vinyl acetate) film layer (4) between the back surfaces of the two mirrors (1,2), and laminating the furniture door arranged in this manner, **characterised in that,** when the protective varnish (3) and dusted metal layer is removed in said zones (5), the additional EVA film (6) layer is arranged in at least one opaque or transparent zone (5) of at least one mirror (1,2), and then the two mirrors (1,2) are arranged with their back surfaces together with the EVA film layers(4,6) separating them and the door arranged in this manner is annealed to liquefy the EVA film layer (4) and bond both mirrors (1,2) together, wherein before the start of lamination of a door leaf arranged in one assembly, this door assembly is placed under vacuum to vent the mirrors (1,2) arranged in one assembly and to reduce the pressure in the lamination zone to the value from -0.5 to -1.0 bar.

7. The method, according to claim 6, **characterised in that,** prior to pressure reduction in the lamination zone, the arranged door assembly is sealed at the edges, preferably by covering the edges with a sealing foil.

8. The method, according to claim 6 or 7, **characterised in that,** in the first stage in the lamination zone the temperature is increased to 60°C-80°C and this temperature is maintained for a period of about 20-40 minutes, and then in the second lamination stage the temperature in this annealing zone is increased to 110°C-135°C and this temperature is maintained for 20-40 minutes, and then the pressure is increased to normal pressure and the temperature in the annealing zone is decreased to the ambient temperature.

9. The method, according to one of the claims from 6 to 8, **characterised in that,** before the two mirrors (1,2) are bonded together, on the EVA film layer (4) separating the mirrors the ferromagnetic film layer (7) is applied from at least one side.

## Patentansprüche

1. Spiegelmöbeltür, beinhaltend zwei Spiegel (1, 2), verbunden durch Kleben hinterer Oberflächen beider Spiegel (1, 2), beschichtet mit Metallpulver und Schutzlack (3) durch eine Verbundschicht (4) der EVA-Folie (Ethylen-Vinylacetat) auf eine solche Art und Weise, dass die Spiegel (1,2) auf beiden Seiten einen Türflügel bilden, wobei die genannten Spiegel miteinander mit einer Trennschicht (4) der genannten EVA-Folie verbunden sind, wobei jeder Spiegel (1, 2) lichtdurchlässige Zonen (5) ohne Schutzlack (3) und Metallpulver enthält, wo die lichtdurchlässigen Zonen (5) in beiden verbundenen Spiegeln (1,2) sich so decken, dass bei verbundenen Spiegel (1,2) das Licht die lichtdurchlässigen Zonen (5) durchlassen kann, **dadurch gekennzeichnet, dass** sich mindestens in einer lichtdurchlässigen Zone (5) ohne Schutzlackschicht (3) und Metallpulverschicht mindestens eines Spiegels (1,2) ein zusätzliches Stück der EVA-Folie (6) befindet.

2. Spiegelmöbeltür nach Anspruch 1, **dadurch gekennzeichnet, dass** die anfängliche Dicke des zusätzlichen Stücks der EVA-Folie (6) in der lichtdurchlässigen Zone (5) ohne Schutzlackschicht (3) und Metallpulver, von 0,2 mm bis 0,76 mm beträgt.

3. Spiegelmöbeltür nach Anspruch 1 oder 2, **dadurch gekennzeichnet, dass** die EVA-Folie (4,6) Mattfolie ist.

4. Spiegelmöbeltür nach Anspruch 1 oder 2, **dadurch gekennzeichnet, dass** die EVA-Folie (4,6) transparente Folie ist.

5. Spiegelmöbeltür nach einem der Ansprüche von 1 bis 4, **dadurch gekennzeichnet, dass** die Schicht (4) der EVA-Folie, die die beiden Spiegel trennt, auf ihrer Oberfläche eine Schicht der ferromagnetischen Folie hat (7).

6. Verfahren zur Herstellung der Spiegelmöbeltür nach einer der vorher genannten Ansprüchen, bestehend darin, dass die zwei Spiegel (1,2) geschnitten werden und danach von den Zonen der Spiegel (1,2), die matt oder transparent werden sollen an diesen Stellen Schutzlackschicht (3) und Metallpulverschicht entfernt werden, wobei zwischen den hinteren Oberflächen beider Spiegel (1,2) eine Schicht (4) der EVA-Folie (Ethylen-Vinylacetat) eingesetzt wird und so gebildete Spiegelmöbeltüre laminiert werden, **dadurch gekennzeichnet, dass** nach der Entfernung in den genannten Zonen (5) der Schutzlackschicht (3) und des Metallpulvers in mindestens einer matten oder transparenten Zone (5) mindestens eines Spiegels (1,2) eine zusätzliche Schicht (6) der EVA-Folie eingesetzt wird und dann beide Spiegel (1,2) miteinander mit hinteren Oberflächen mit ihren Trennschichten (4,6) der EVA-Folie laminiert werden, damit die Schicht (4) der EVA-Folie flüssig wird und beide Spiegel (1,2) miteinander verbunden werden, wobei vor der Laminierung eines so gebildetes Türflügels wird dieser unter Bedingungen des Unterdrucks zur Entlüftung der verbundenen Spiegel (1,2) und zur Verminderung des Druckes in der Laminierungszone bis auf den Wert von -0,5 bis -1,0 bar behandelt.

7. Verfahren zur Herstellung der Spiegelmöbeltür nach Anspruch 6 **dadurch gekennzeichnet, dass** vor der Verminderung des Druckes in der Laminierungszone komplette Türen an den Kanten abgedichtet werden, günstig durch Bekleben dieser Kanten mit Abdichtungsfolie.

8. Verfahren zur Herstellung der Spiegelmöbeltür nach Anspruch 6 oder 7,
**dadurch gekennzeichnet, dass** in der ersten Phase der Laminierung die Temperatur bis auf die Werte von 60°C bis 80°C erhöht und in der Zeit von ca. 20 bis 40 Minuten aufrechterhalten und in der zweiten Phase der Laminierung bis auf die Werte von 110°C bis 135°C und in der Zeit von 20 bis 40 Minuten aufrechterhalten wird und dann der Druck bis auf normalen Druck gestiegen wird und die Temperatur in der Laminierungszone bis auf die Umgebungstemperatur versenkt wird.

9. Verfahren zur Herstellung der Spiegelmöbeltür nach einem der Ansprüche von 6 bis 8, **dadurch gekennzeichnet, dass** vor der Verbindung beider Spiegel (1,2) diese Spiegel trennende Schicht (4) der EVA-Folie mit mindestens einer Schicht der ferromagnetischen Folie (7) bedeckt wird.

## Revendications

1. Porte de meble à miroir, contenant deux miroirs (1,2) connectés l'un à l'autre par le collage des surfaces postérieures de tous les deux miroirs (1,2) pulverisées d'une couche du métal et recouvertes du vernis de protection (3), par le biais de la couche de connexion (4) du film EVA (d'éthylène-acétate de vinyle) ainsi l'aile de porte de tous les deux côtés sont miroirs (1,2) et les deux miroirs cités sont collés l'un à l'autre par la couche (4) du film EVA les séparant, et chaque des miroirs (1,2) contient des zones (5) perméables à la lumière, dépourvues de la couche du vernis de protection (3) et du métal pulvérisé où ces zones (5) perméables à la lumière dans les deux miroirs composés (1,2) se chevauchent de manière que dans les miroirs collés l'un à l'autre (1,2) la lumière puisse traverser les deux zones (5) perméables à la lumière, **caractérisée en ce qu'**au moins dans une zone (5) perméable à la lumière, dépourvue de la couche du vernis de protection (3) et de la couche du métal d'au moins un miroir (1,2), il y a une feuille du film (6) EVA additionnelle

2. Porte selon la revendication 1, **caractérisée en ce que** l'épaisseur initiale de la feuille additionnelle (6) du film EVA dans la zone (5) perméable à la lumière, dépourvue de la couche du vernis de protection (3) et du métal pulverisé, est de 0,2mm à 0,76mm.

3. Porte selon la revendication 1ou 2, **caractérisée en ce que** le film (4,6) EVA est le film opaque.

4. Porte selon la revendication 1ou 2, **caractérisée en ce que** le film (4,6) EVA est le film transparent.

5. Porte selon l'une des revendications de 1 à 4, **caractérisée en ce que** la couche (4) du film EVA , séparant les deux miroirs, comprend sur sa surface une couche du film ferromagnétique (7).

6. Procédé de fabrication de la porte de meuble à miroir selon n'importe quelle revendication précédente, consistant à ce qu'on coupe ces deux miroirs (1,2), et ensuite ces zones de miroirs (1,2) qui vont être opaques ou transparentes sont soumises à l'opération d'éliminer dans ces lieux des couches du vernis de protection (3) et du métal pulverisé, et parmi les surfaces postérieures de ces deux miroirs (1,2) est mise une couche (4) du film EVA (d'éthylène-acétate de vinyle) et la porte ainsi composée, est soumise à la stratification, **caractérisée en ce qu'**après l'élimination, dans les zones citées, (5) de la couche du vernis de protection (3) et du métal pulverisé, on pose dans au moins une zone opaque ou transparente (5) d'au moins un miroir (1,2) une couche additionnelle (6) du film EVA, et puis tous les deux miroirs (1,2) sont connectés l'un à l'autre par ses surfaces postérieures avec les couches (4,6) du film EVA les séparant et on recuit la porte ainsi composée pour faire liquider la couche (4) du film EVA et coller tous les deux miroirs (1,2) l'un à l'autre, et avant de commencer la stratification de l'aile de porte composée en un ensemble, cet ensemble de porte est placé dans les conditions de dépression pour désaérer les miroirs composés en un seul ensemble (1,2) et pour réduire la pression dans la zone de stratification jusqu'à la valeur de -0,5 à -1,0 bars.

7. Procédé selon la revendication 6 **caractérisé en ce qu'**avant de commencer à réduire la pression dans la zone de stratification, l'ensemble composé est calfeutré sur les bords favorablement en recouvrant ces bords du film d'étanchéité .

8. Procédé selon la revendication 6 ou 7, **caractérisé en ce que** dans la première étape, dans la zone de stratification, la température est élevée jusqu'à la valeur de 60°C à 80°C et cette température est maintenue d'environ 20 à 40 minutes, et ensuite, dans la seconde étape de la stratification, dans cette zone de recuit, la température est élevée jusqu'à la valeur de 110°C à 135°C et elle est maintenue d'environ de 20 à 40 minutes, et ensuite la pression est élevée à la pression normale et la température dans la zone de recuit est réduite à la température ambiante.

9. Procédé selon l'une des revendications de 6 à 8, **caractérisé en ce qu'**avant le collage de ces deux miroirs (1,2), sur la couche du (4) film EVA séparant ces miroirs, une couche de film ferromagnétique (7) est posée au moins d'un côté.
